# FASCICULE DE BREVET EUROPEEN

(11) **EP 2 053 827 B1**
(45) Date de publication et mention de la délivrance du brevet: **01.08.2018**
(21) Numéro de dépôt: 08018351.0
(22) Date de dépôt: 21.10.2008
(51) Int. Cl.: H04L 9/32, G07F 7/10

(54) **Procédé de personnalisation sécurisé d'un chipset NFC**
Verfahren der gesicherten Personalisierung eines NFC-Chipsets
Method for secure personalisation of an NFC chipset

(30) Priorité: 23.10.2007 FR 0707408
(43) Date de publication de la demande: 29.04.2009
(73) Titulaire: Inside Secure, 13590 Meyreuil (FR)
(72) Inventeur: Benteo, Bruno, 31400 Toulouse (FR); Felix, Benoit, 13600 La Ciotat (FR); Nerot, Sebastien, 13860 Aix en Provence (FR)
(74) Mandataire: de Roquemaurel, Bruno

(56) Documents cités:
- EP-A- 1 802 148
- EP-A- 1 860 840
- "MasterCard announces NFC trial in Dallas" CARD TECHNOLOGY TODAY, ELSEVIER, vol. 18, no. 11-12, 1 novembre 2006 (2006-11-01), page 7, XP005816095 ISSN: 0965-2590
- GERALD MADLMAYR ET AL: "The benefit of using SIM application toolkit in the context of near field communication applications" MANAGEMENT OF MOBILE BUSINESS, 2007. ICMB 2007. INTERNATIONAL CONFEREN CE ON THE, IEEE, PI, 1 juillet 2007 (2007-07-01), pages 5-5, XP031119380 ISBN: 978-0-7695-2803-8
- MIKKO LAUKKANEN ED - JULIEN GOSSA ET AL: "Towards Operating Identity-based NFC Services" PERVASIVE SERVICES, IEEE INTERNATIONAL CONFERENCE ON, IEEE, PI, 1 juillet 2007 (2007-07-01), pages 92-95, XP031123208 ISBN: 978-1-4244-1325-6

## Description

La présente invention concerne un procédé de personnalisation d'un système ou chipset NFC (Near Field Communication) comprenant un circuit d'interface NFC, notamment pour exécuter une application sécurisée sans contact.

Dans la description qui suit, on entend par "application sécurisée", une application mettant en oeuvre des moyens de protection empêchant l'exécution de l'application pour des usages non prévus et par des personnes non autorisées. De même, on entend par mémoire ou processeur "sécurisé" une mémoire ou un processeur équipé de moyens pour empêcher l'accès à la mémoire ou le contrôle du processeur par des personnes non autorisées.

La technologie NFC est actuellement développée par un consortium industriel regroupé sous le nom de Forum NFC (http://www.nfc-forum.org). La technologie NFC est dérivée de la technologie RFID (Radio Frequency Identification) et utilise des composants ou processeurs NFC présentant plusieurs modes de fonctionnement, notamment un mode "lecteur" (Reader Mode), et un mode "émulation de carte".

En mode "lecteur", un processeur NFC fonctionne comme un lecteur RFID conventionnel pour accéder en lecture ou écriture à une puce RFID (carte à puce ou étiquette sans contact). Le processeur NFC émet un champ magnétique, envoie des données par modulation de l'amplitude du champ magnétique et reçoit des données par modulation de charge et couplage inductif. Ce mode est également qualifié de mode actif, puisque dans ce mode le processeur NFC émet un champ magnétique.

Dans le mode "émulation", décrit par le brevet EP 1 327 222 au nom de la demanderesse, un processeur NFC fonctionne de façon passive à la manière d'un transpondeur pour dialoguer avec un autre lecteur et être vu par l'autre lecteur comme une puce RFID. Le processeur n'émet pas de champ magnétique, reçoit des données en démodulant un champ magnétique émis par l'autre lecteur et émet des données par modulation de l'impédance de son circuit d'antenne (modulation de charge). Ce mode est également qualifié de mode passif, puisque dans ce mode le processeur NFC n'émet pas de champ magnétique.

D'autres modes de communication peuvent être mis en oeuvre, notamment un mode "device" où un composant doit s'apparier avec un autre processeur NFC se trouvant dans le même mode de fonctionnement, chaque processeur NFC se place alternativement dans un état passif (sans émission de champ) pour recevoir des données et dans un état actif (avec émission de champ) pour émettre des données.

Dans ces trois modes de fonctionnement, un processeur NFC peut mettre en oeuvre plusieurs protocoles de communication sans contact par exemple ISO 14443-A, ISO 14443-B, ISO 15693, Felica®, etc. Chaque protocole définit une fréquence d'émission du champ magnétique, une méthode de modulation de l'amplitude du champ magnétique pour émettre des données en mode actif, et une méthode de modulation de charge par couplage inductif pour émettre des données en mode passif. Un processeur NFC peut donc être un dispositif multimode et multiprotocole.

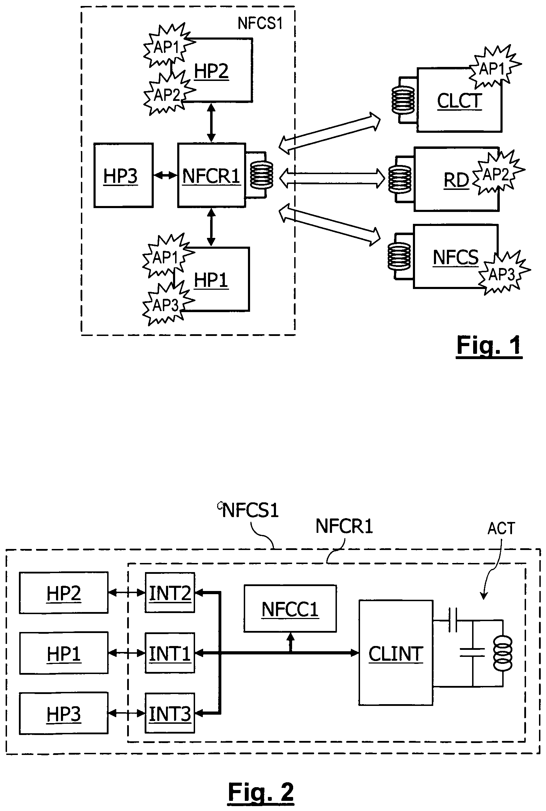

En raison de ses capacités de communication étendues, un processeur NFC est destiné à être intégré dans des dispositifs portatifs tels des téléphones portables ou des PDA (Assistant Numérique Personnel). On est ainsi amené à réaliser un système ou chipset NFC du type représenté en figure 1, sous la référence NFCS1. Le système NFCS1 comprend un processeur NFC désigné "NFCR1", et au moins un premier processeur hôte HP1. On entend par "processeur hôte" tout circuit intégré comprenant un microprocesseur ou un microcontrôleur et qui est connecté à un port du processeur NFC. Dans de nombreuses applications, le système NFC comprend également un second processeur hôte HP2, et parfois un troisième HP3.

Le premier processeur hôte HP1 est le processeur principal du dispositif dans lequel le processeur NFC est embarqué. C'est généralement un processeur non sécurisé, par exemple le circuit de bande de base d'un téléphone mobile (circuit "baseband" ou de radiotéléphonie) qui contrôle divers éléments périphériques du téléphone, comme le clavier, l'afficheur, le microphone, l'écouteur, etc.

Le second processeur hôte HP2 peut être un circuit sécurisé, par exemple le processeur sécurisé d'une carte SIM (Subscriber Identification module) délivrée par un opérateur de téléphonie mobile, mémorisant notamment un identifiant d'abonné.

Le troisième processeur hôte HP3 peut être également un processeur sécurisé fourni par un autre fournisseur de service, par exemple pour des applications sécurisées telles qu'une application de paiement ou d'accès à un service payant. Un tel processeur hôte mémorise également un identifiant d'utilisateur du service.

Les ressources du processeur NFC sont donc mises à la disposition des processeurs HP1, HP2, HP3 pour leur permettre de gérer des applications sans contact. Un processeur NFC peut ainsi gérer les applications suivantes.
1) Des applications de type AP1 dans lesquelles le processeur NFC NFCR1 est en mode lecteur pour lire ou écrire dans un circuit intégré sans contact CLCT. Le système NFCS1 est dans ce cas utilisé comme un lecteur RFID. Ce type d'application peut être gratuit et consister par exemple dans la lecture de données publicitaires insérées dans un affichage publicitaire d'une borne. L'application peut aussi être payante et consister par exemple dans la lecture d'informations réservées à des abonnés. Le programme de l'application AP1 est de préférence détenu et exécuté par le processeur HP1 si le service est gratuit ou sera de préférence détenu et exécuté par le processeur HP2 ou HP3 s'il est payant car il nécessite une identification de l'abonné. Ainsi, comme illustré en figure 1, une application AP1 peut être prise en charge par l'un ou l'autre des processeurs hôtes HP1, HP2, HP3.
2) Des applications de type AP2 dans lesquelles le processeur NFC NFCR1 est en mode émulation de carte pour être lu par des lecteurs RD conventionnels dans des applications de paiement ou de contrôle d'accès payant (machine de paiement, entrée de métro, etc.). Le système NFCS1 est alors utilisé comme une carte à puce de paiement. Le programme de l'application AP2 est de préférence détenu et exécuté par le processeur sécurisé HP2, comme représenté en figure 1, car l'accès au service nécessite une identification de l'abonné.
3) Des applications de type AP3 : le processeur NFCR1 est en mode "device" et dialogue avec un autre dispositif, par exemple un lecteur embarqué dans un autre système NFC NFCS (par exemple un téléphone mobile ou un ordinateur). Ce type d'application est généralement gratuit et permet de transférer des paquets de données d'un dispositif à l'autre (transfert de fichiers en point à point notamment). Le programme de l'application AP3 est de préférence détenu et exécuté par le processeur non sécurisé HP1, comme illustré en figure 1, qui dispose d'une puissance de calcul supérieure au processeur sécurisé HP2 si celui-ci est un processeur de carte SIM.

La figure 2 représente schématiquement un exemple d'architecture du processeur NFC NFCR1 au sein du système NFCS1. Le processeur NFCR1 comprend une interface CLINT d'émission/réception de données sans contact couplée à un circuit d'antenne ACT, des interfaces de communication filaires INT1, INT2, INT3 reliées à l'interface CLINT, et un processeur de routage ou de transfert de données NFCC1. L'interface INT1 est connectée au processeur hôte HP1, l'interface INT2 connectée au processeur hôte HP2 et l'interface INT3 au processeur hôte HP3.

La présente invention vise des applications sécurisées permettant d'utiliser un système NFC tel qu'un téléphone mobile comme moyen de paiement ou d'accès à un service. Il n'est toutefois pas souhaitable d'ajouter un second connecteur pour connecter, en plus du processeur d'une carte SIM, un processeur sécurisé d'une carte sécurisée telle qu'une carte de paiement. Par ailleurs, si le téléphone est équipé d'un processeur NFC associé à un processeur hôte sécurisé, il n'est pas souhaitable d'ajouter au système un autre processeur hôte sécurisé ou un connecteur qui ne servirait qu'à transférer les données d'un processeur hôte d'une carte de paiement vers le processeur hôte associé au processeur NFC.

Le document EP 1 860 840 décrit un procédé pour introduire dans un module sécurisé d'un terminal de communication mobile, des données de personnalisation relatives à un utilisateur et un opérateur de réseau mobile, lors d'une connexion du terminal mobile à un réseau mobile.

Une idée de l'invention est de personnaliser avec des informations de carte de paiement ou d'accès à un service payant, le processeur hôte sécurisé du système NFC ou le processeur NFC lui-même si celui-ci est sécurisé. Il est par ailleurs souhaitable que la sécurité offerte par une telle utilisation d'un système NFC soit au moins équivalente à celle d'une carte de paiement classique.

Ainsi, dans un mode de réalisation, il est prévu un procédé de personnalisation d'un processeur sécurisé dans un système NFC pour exécuter une application sécurisée. Selon un mode de réalisation, le procédé comprend des étapes consistant à : mettre en communication un support de stockage mémorisant de manière sécurisée des données d'identification d'un utilisateur, avec une unité de traitement, transmettre à l'unité de traitement les données d'identification de l'utilisateur stockées sur le support de stockage, obtenir par l'unité de traitement des données de personnalisation correspondant aux données d'identification de l'utilisateur et distinctes de celles-ci, obtenir par l'unité de traitement des données d'identification d'un système NFC reçues de l'utilisateur et du système NFC, les données d'identification du système NFC étant distinctes des données d'identification de l'utilisateur, le système NFC comprenant un processeur sécurisé, les données d'identification du système NFC comprenant une clé de chiffrement du processeur sécurisé, vérifier par l'unité de traitement une correspondance entre les données d'identification du système NFC, reçues de l'utilisateur et celles reçues du système NFC, chiffrer par l'unité de traitement les données de personnalisation en utilisant la clé de chiffrement, et transmettre au système NFC les données de personnalisation chiffrées, recevoir par le processeur sécurisé les données de personnalisation chiffrées, et déchiffrer les données de personnalisation, et mémoriser d'une manière sécurisée les données de personnalisation par le processeur sécurisé.

Selon un mode de réalisation, les données d'identification de l'utilisateur sont transmises à l'unité de traitement en mettant en communication le support de stockage avec un terminal connecté à l'unité de traitement.

Selon un mode de réalisation, les données d'identification du système NFC peuvent comprendre un identifiant d'un processeur NFC et/ou d'un processeur hôte couplé au processeur NFC et sont au moins partiellement fournies par l'utilisateur à un terminal connecté à l'unité de traitement ou transmises par une liaison sans contact établie entre le processeur sécurisé et le terminal.

Selon un mode de réalisation, le procédé comprend des étapes de génération d'une donnée secrète commune partagée par l'unité de traitement et un terminal connecté à l'unité de traitement et auquel a accès l'utilisateur, et de fourniture de la donnée secrète à l'utilisateur par le terminal, puis au système NFC par l'utilisateur.

Selon un mode de réalisation, le système NFC calcule une valeur condensée en appliquant une fonction cryptographique déterministe aux données d'identification du système NFC et à la donnée secrète et transmet la valeur condensée calculée avec les données d'identification du système NFC à l'unité de traitement, et l'unité de traitement vérifie la valeur condensée en appliquant la fonction cryptographique aux données d'identification du système NFC et à la donnée secrète qu'il a générée, et arrête le traitement de personnalisation si la valeur condensée reçue est différente de la valeur condensée calculée.

Selon un mode de réalisation, le système NFC est intégré dans un terminal de télécommunication mobile, et les données de personnalisation chiffrées sont transmises par l'unité de traitement au système NFC par l'intermédiaire d'un réseau de télécommunication mobile.

Selon un mode de réalisation, les données de personnalisation chiffrées sont transmises au système NFC par une liaison sans contact établie entre le système NFC et un terminal connecté à l'unité de traitement ou une carte à mémoire remise à l'utilisateur et comportant une interface NFC ou une carte à mémoire connectée au terminal.

Selon un mode de réalisation, les données de personnalisation chiffrées sont transmises avec une valeur condensée obtenue par application d'une fonction cryptographique déterministe aux données de personnalisation chiffrées et aux données d'identification du système NFC, le système NFC vérifiant la valeur condensée reçue en appliquant la fonction cryptographique aux données de personnalisation chiffrées reçues de l'unité de traitement et aux données d'identification du système NFC, et arrête le traitement de personnalisation si la valeur condensée reçue est différente de la valeur calculée condensée.

Selon un mode de réalisation, la clé de chiffrement du processeur sécurisé comprend une clé publique et une clé secrète correspondante qui peuvent être générées localement par le processeur sécurisé et qui peuvent être insérées dans le processeur sécurisé en association avec un certificat émis par une autorité de certification.

Un autre mode de réalisation prévoit une unité de traitement pour personnaliser un processeur sécurisé d'un système NFC afin d'exécuter une application sécurisée. L'unité de traitement est configurée pour : obtenir des données d'identification d'un utilisateur stockées de manière sécurisée sur un support de stockage, et des données de personnalisation correspondant aux données d'identification de l'utilisateur et distinctes de celles-ci, obtenir des données d'identification d'un système NFC reçues de l'utilisateur et du système NFC, les données d'identification du système NFC étant distinctes des données d'identification de l'utilisateur, les données d'identification du système NFC comprenant une clé de chiffrement d'un processeur sécurisé du système NFC, vérifier une correspondance entre les données d'identification du système NFC, reçues de l'utilisateur et celles reçues du système NFC, et chiffrer les données de personnalisation en utilisant la clé de chiffrement, et transmettre au système NFC les données de personnalisation chiffrées.

Selon un mode de réalisation, les données d'identification du système NFC comprennent un identifiant d'un processeur NFC et/ou d'un processeur hôte couplé au processeur NFC.

Selon un mode de réalisation, l'unité de traitement est configurée pour générer une donnée secrète commune avec un terminal connecté à l'unité de traitement, la donnée secrète étant partagée par l'unité de traitement et le terminal.

Selon un mode de réalisation, l'unité de traitement est configurée pour recevoir et vérifier une valeur condensée obtenue en appliquant une fonction cryptographique aux données d'identification du système NFC et à la donnée secrète qu'il a générée, et pour arrêter le traitement de personnalisation si la valeur condensée reçue est différente de la valeur condensée calculée.

Selon un mode de réalisation, l'unité de traitement est configurée pour transmettre les données de personnalisation chiffrées au système NFC par l'intermédiaire d'un réseau de télécommunication mobile ou d'un terminal connecté à l'unité de traitement par un réseau et au système NFC par une liaison sans contact.

Selon un mode de réalisation, l'unité de traitement est configurée pour transmettre les données de personnalisation chiffrées avec une valeur condensée obtenue par application d'une fonction cryptographique déterministe aux données de personnalisation chiffrées et aux données d'identification du système NFC.

Un autre mode de réalisation prévoit un système de personnalisation d'un processeur sécurisé dans un système NFC pour exécuter une application sécurisée. Le système de personnalisation comprend : un système NFC d'un utilisateur, comprenant un processeur sécurisé, un support de stockage mémorisant de manière sécurisée des données d'identification de l'utilisateur, et une unité de traitement telle précédemment définie, le processeur sécurisé étant configuré pour recevoir des données de personnalisation chiffrées, déchiffrer les données de personnalisation, et mémoriser d'une manière sécurisée les données de personnalisation.

Selon un mode de réalisation, le système de personnalisation comprend un terminal connecté à l'unité de traitement et au support de stockage, le terminal étant configuré pour extraire du support de stockage les données d'identification de l'utilisateur et pour les transmettre à l'unité de traitement.

Selon un mode de réalisation, le système de personnalisation comprend un terminal connecté à l'unité de traitement, le terminal étant configuré pour recevoir au moins partiellement les données d'identification du système NFC soit de l'utilisateur, soit du processeur sécurisé par l'intermédiaire d'une liaison sans contact du système NFC, les données d'identification du système NFC pouvant comprendre un identifiant d'un processeur NFC et/ou d'un processeur hôte couplé au processeur NFC.

Selon un mode de réalisation, le système de personnalisation comprend un terminal connecté à l'unité de traitement et auquel a accès l'utilisateur, le terminal et l'unité de traitement étant configurés pour générer une donnée secrète commune partagée par l'unité de traitement et le terminal, le terminal étant configuré pour fournir la donnée secrète à l'utilisateur, le système NFC étant configuré pour recevoir la donnée secrète de l'utilisateur.

Selon un mode de réalisation, le système NFC est configuré pour calculer une valeur condensée en appliquant une fonction cryptographique déterministe aux données d'identification du système NFC et à la donnée secrète, et pour transmettre la valeur condensée calculée avec les données d'identification du système NFC à l'unité de traitement.

Selon un mode de réalisation, le système NFC est intégré dans un terminal de télécommunication mobile.

Selon un mode de réalisation, le système de personnalisation comprend un terminal connecté à l'unité de traitement et comportant une interface NFC en communication par une liaison sans contact avec le système NFC, le terminal et le système NFC étant configurés pour que les données de personnalisation chiffrées soient transmises de l'unité de traitement au système NFC par la liaison sans contact par l'intermédiaire du terminal.

Selon un mode de réalisation, le système de personnalisation comprend une carte à mémoire remise à l'utilisateur et susceptible d'être mise en communication par une liaison sans contact avec le système NFC, soit directement, soit par l'intermédiaire d'un terminal auquel la carte à mémoire est connectée et comportant une interface NFC en communication par une liaison sans contact avec le système NFC, la carte à mémoire étant configurée pour mémoriser les données de personnalisation chiffrées et les transmettre au système NFC.

Selon un mode de réalisation, le système NFC est configuré pour vérifier la valeur condensée reçue en appliquant la fonction cryptographique aux données de personnalisation chiffrées reçues de l'unité de traitement et aux données d'identification du système NFC, et pour arrêter le traitement de personnalisation si la valeur condensée reçue est différente de la valeur calculée condensée.

Selon un mode de réalisation, le processeur sécurisé est configuré pour générer la clé publique et la clé secrète correspondante.

Selon un mode de réalisation, le processeur sécurisé est configuré pour recevoir la clé publique et la clé secrète correspondante en association avec un certificat émis par une autorité de certification.

Des exemples de réalisation de l'invention seront décrits dans ce qui suit, à titre non limitatif en relation avec les figures jointes parmi lesquelles :
- la figure 1 précédemment décrite représente sous forme de bloc une architecture classique de système NFC, et des circuits sans contact avec lesquels le système NFC peut dialoguer,
- la figure 2 précédemment décrite représente sous forme de bloc l'architecture classique d'un processeur NFC présent dans le système NFC de la figure 1,
- la figure 3 représente un système comportant un système NFC, dans lequel sont mis en oeuvre des modes de réalisation de l'invention,
- le figure 4 représente une séquence d'échanges de données illustrant des modes de réalisation de l'invention,
- le figure 5 représente une autre séquence d'échanges de données illustrant d'autres modes de réalisation de l'invention,
- la figure 6 représente un exemple d'architecture matérielle d'un processeur NFC présent dans le système NFC,
- la figure 7 représente un exemple d'architecture matérielle d'un processeur hôte sécurisé présent dans le système NFC.

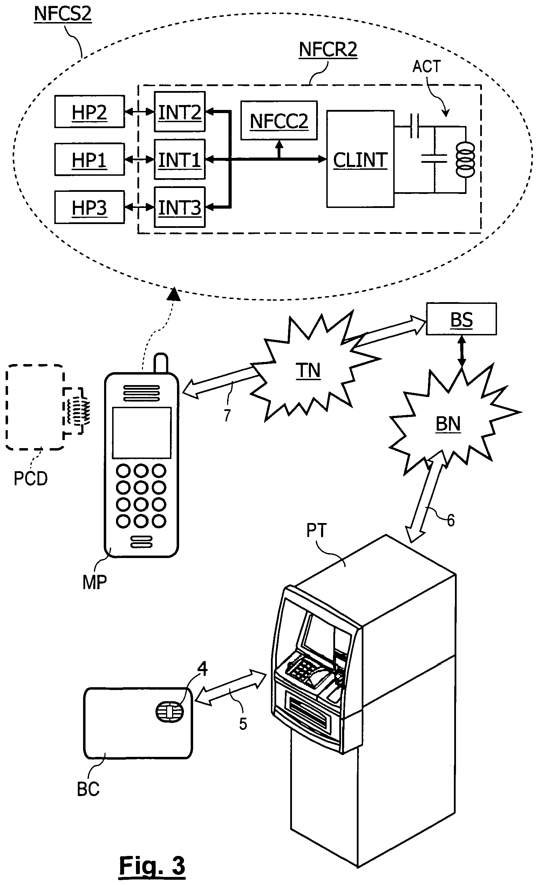

La figure 3 représente un exemple de système capable d'assurer la personnalisation d'un système NFC en vue d'exécuter une application sécurisée avec un organisme, tel qu'un organisme bancaire. Le système comprend un système NFC NFCS2, un terminal PT, une carte à microprocesseur BC telle qu'une carte bancaire émise par l'organisme, et un serveur distant BS mis en oeuvre par l'organisme. Le terminal PT comprend un lecteur de carte à microprocesseur pour établir une communication sécurisée avec et/ou sans contact avec un microprocesseur intégré dans une carte, comme la carte BC. Le terminal PT dispose d'une liaison 6 avec le serveur distant BS par l'intermédiaire d'un réseau de transmission de données BN. La carte BC intègre une mémoire stockant de manière sécurisée des informations d'identification de l'utilisateur vis-à-vis de l'organisme, et éventuellement un microprocesseur sécurisé 4 susceptible d'engager une transaction sécurisée avec le terminal PT.

Le terminal PT est par exemple un terminal de paiement ou un distributeur de billets de banque. La carte BC est par exemple une carte bancaire ou une carte de paiement.

Le système NFCS2 est intégré dans un terminal mobile de communication tel qu'un téléphone mobile MP et mis à la disposition de l'utilisateur possédant la carte BC. Le serveur BS peut disposer d'un accès à un réseau téléphonique TN pour établir une liaison téléphonique 7 avec un terminal tel que le terminal MP. Le système NFCS2 comprend un processeur NFC NFCR2, et des processeurs hôte HP1, HP2, HP3. Le premier processeur hôte HP1 est le processeur principal du terminal mobile MP, c'est-à-dire le circuit de bande ("baseband") ou de radiotéléphonie qui contrôle divers éléments périphériques du terminal, comme le clavier, l'afficheur, le microphone, l'écouteur, les organes d'établissement de communications via un réseau de téléphonie mobile, etc.

Le second processeur hôte HP2 peut être un circuit sécurisé, par exemple le processeur sécurisé d'une carte SIM (Subscriber Identification module) délivrée par un opérateur de téléphonie mobile, mémorisant notamment un identifiant d'abonné, et un numéro de téléphone par lequel l'abonné peut être appelé.

Le troisième processeur hôte HP3 est un processeur sécurisé vierge, c'est-à-dire non personnalisé avec des informations relatives à l'utilisateur.

Le processeur NFCR1 comprend une interface CLINT d'émission/réception de données sans contact équipée d'un circuit d'antenne ACT, des interfaces de communication filaires INT1, INT2, INT3 reliées à l'interface CLINT, et un processeur NFCC2 assurant notamment des fonctions de routage ou de transfert de données entre les interfaces CLINT, INT1-INT3. L'interface INT1 est connectée au processeur hôte HP1, l'interface INT2 connectée au processeur hôte HP2 et l'interface INT3 au processeur hôte HP3.

A noter que le si le processeur NFCR2 ou NFCC2 est sécurisé, et peut assurer les fonctions d'un processeur hôte, le processeur HP3 n'est pas nécessaire dans le cadre de la présente invention. Dans la description qui suit, les opérations exécutées par le processeur HP3 peuvent donc être réalisées par le processeur NFCR2.

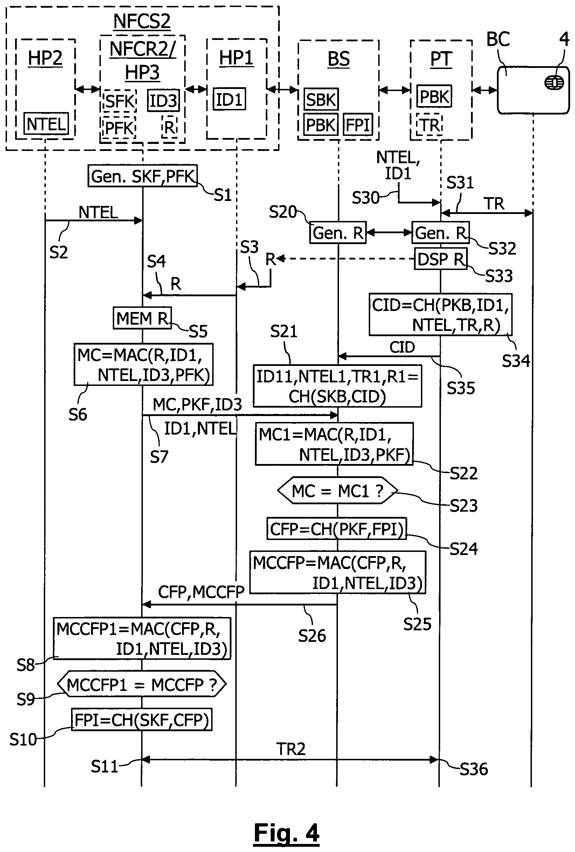

La figure 4 représente une séquence d'échanges de données d'un procédé de personnalisation du processeur HP3 ou NFCR2 selon un mode de réalisation mis en oeuvre dans le système de la figure 3.

Le serveur distant BS mémorise une paire de clés asymétriques publique et privée PKB, SKB d'un organisme fournissant des cartes à microprocesseur comprenant la carte BC, ainsi que des données de personnalisation FPI relatives à l'utilisateur de la carte BC dans le cadre d'un service sécurisé géré par le serveur BS.

Le terminal PT mémorise la clé publique PKB afin de pouvoir transmettre de manière sécurisée des données vers le serveur BS via le réseau BN. Le processeur 4 de la carte BC peut exécuter une application sécurisée telle qu'une application de paiement de type B0', EMV®, VISA® ou PAYPASS®, installée dans sa mémoire.

Le processeur hôte HP1 mémorise d'une manière non modifiable un identifiant ID1 permettant d'identifier de manière sûre le système NFCS2 (ou le terminal MP). Le processeur hôte HP2 mémorise d'une manière non modifiable, notamment un numéro d'appel NTEL (numéro de téléphone) par lequel le terminal MP peut être appelé par l'intermédiaire du réseau TN. Le processeur NFCR2 et/ou le processeur hôte HP3 mémorise également un identifiant ID3 permettant d'identifier de manière sûre le processeur HP3/NFCR2.

La séquence illustrée par la figure 4 comprend des étapes S1 à S11 exécutées par le processeur HP3/NFCR2, des étapes S20 à S26 exécutées par le serveur distant BS, et des étapes S30 à S34 exécutées par le terminal PT.

Les étapes S1 et S2 sont des étapes d'initialisation au cours desquelles le processeur HP3/ NFCR2 génère une paire de clés asymétriques publique PKF et privée SKF, et reçoit le numéro d'appel NTEL du processeur HP2. Les clés PKF et SKF peuvent également avoir été certifiées par une autorité de certification et insérées dans le processeur par une autorité habilitée. Dans ce cas, l'étape S1 n'est bien entendu pas nécessaire.

L'utilisateur met en communication la carte BC avec le terminal PT qui lui demande d'introduire le numéro NTEL et l'identifiant ID1 du terminal MP. A l'étape S30, l'utilisateur introduit les informations demandées, par exemple au moyen d'un clavier du terminal PT. A l'étape S31, le processeur 4 de la carte BC et le terminal PT établissent entre eux un lien sécurisé et s'échangent des données de transaction TR contenant notamment des informations permettant à l'organisme contrôlant le serveur BS d'identifier l'utilisateur. Il importe ici que le serveur BS puisse identifier de manière sûre l'utilisateur afin de pouvoir déterminer quelles sont les informations de personnalisation FPI de l'utilisateur.

Aux étapes S20 et S32, le serveur BS et le terminal PT communiquent entre eux pour générer par un procédé connu en soi, une donnée secrète commune R connue d'eux seuls. A l'étape S33, le terminal PT affiche sur un écran la donnée secrète R pour qu'elle soit lue par l'utilisateur. Aux étapes suivantes S34, S35, le terminal PT chiffre, en utilisant la clé publique PKB, la donnée secrète R, les données de transaction TR et les données d'identification du terminal MP, à savoir l'identifiant ID1, et le numéro d'appel NTEL, et transmet le résultat du chiffrement CID au serveur BS.

A l'étape S21, le serveur BS reçoit le résultat chiffré CID et le déchiffre à l'aide de la clé privée SKB correspondant à la clé publique PKB. Cette opération de déchiffrement permet d'obtenir un identifiant ID11 de terminal mobile, un numéro d'appel NTEL1, une donnée secrète R1 et des données de transaction TR1. La donnée secrète R1 permet d'établir un lien avec la communication établie aux étapes S20 et S32 ayant permis de générer la donnée secrète R.

A l'étape S3, l'utilisateur introduit, par exemple au moyen d'un clavier, la donnée secrète R qu'il a lue sur le terminal mobile MP. A l'étape S4, la donnée secrète qui est ainsi fournie au processeur HP1, est transmise au processeur HP3/NFCR2. Le processeur HP3/ NFCR2 mémorise la donnée secrète R à l'étape S5. A l'étape suivante S6, le processeur HP3/NFCR2 applique aux données ID1, NTEL, R, ainsi qu'à l'identifiant ID3 et à la clé publique PKF du processeur HP3/NFCR2, une fonction cryptographique déterministe MAC telle que HMAC, 3DES ou AES utilisant R comme clé, et transmet au serveur BS la valeur condensée MC obtenue, avec les identifiants ID3 et la clé publique PKF du processeur HP3/NFCR2 et les identifiants ID1 et NTEL du terminal MP. La transmission de ces données est effectuée par tout moyen, comme par exemple par l'établissement d'une liaison de transmission de données ou l'émission d'un message par exemple de type SMS (Short Message Service) si le terminal MP et le serveur BS ont accès au réseau de téléphonie mobile TN.

A l'étape S22, le serveur BS reçoit ces données et applique aux données reçues ID1, NTEL, ID3, PKF la même fonction MAC utilisant la donnée secrète R comme clé. A l'étape S23, le serveur BS vérifie la cohérence et l'authenticité des informations de transaction TR1 reçues et déchiffrées et vérifie que la valeur condensée obtenue MC1 est identique à la valeur condensée MC reçue.

A noter que le serveur BS peut recevoir plusieurs valeurs MC de différents terminaux mobiles exécutant la séquence de personnalisation. Les valeurs déchiffrées à l'étape S21 sont alors mémorisées dans une table. A chaque nouvelle réception de données MC, ID1, NTEL, ID3, PKF, le serveur BS recherche dans la table la ligne contenant les données d'identification reçues ID1, NTEL du terminal mobile MP et applique la fonction MAC aux données correspondantes dans la table pour obtenir la valeur condensée MC1.

Le serveur BS peut également vérifier dans une base de données ou par une communication avec l'opérateur de téléphonie mobile du terminal MP, si le numéro NTEL reçu est bien celui de l'utilisateur identifié dans la transaction TR.

Si les données reçues ne sont pas cohérentes ou si les deux valeurs MC et MC1 ne sont pas identiques, le serveur BS n'exécute pas les étapes suivantes. Sinon, le serveur chiffre à l'étape S24 les données de personnalisation FPI correspondant à l'identité de l'utilisateur figurant dans les informations de transaction TR, en utilisant la clé publique PKF reçue du processeur HP3/NFCR2. A l'étape S25, le serveur BS applique une fonction cryptographique déterministe, telle que la fonction MAC au résultat du chiffrement CFP obtenu, concaténé avec les identifiants ID1, NTEL et ID3, en utilisant la donnée secrète R comme clé. La valeur condensée MCCFP obtenue par la fonction MAC est transmise à l'étape S26 avec les données chiffrées CFP au processeur HP3/NFCR2, par l'intermédiaire du terminal mobile MP. Cette transmission peut également être effectuée par l'intermédiaire du réseau TN.

A l'étape S8, le processeur HP3/NFCR2 applique la même fonction cryptographique MAC aux données chiffrées CFP reçues, ainsi qu'à la donnée secrète R qu'il a préalablement mémorisée et aux données d'identification ID1, NTEL et ID3. A l'étape suivante S9, le processeur HP3/NFCR2 vérifie l'identité entre la valeur condensée MCCFP reçue et la valeur condensée MCCFP1 obtenue à l'étape S8. Si ces valeurs ne sont pas identiques, le processeur HP3/NFCR2 arrête la personnalisation. Sinon, le processeur HP3/NFCR2 déchiffre à l'étape S10 les données de personnalisation chiffrées CFP à l'aide de la clé privée SKF et obtient ainsi les données de personnalisation FPI qu'il mémorise de manière sécurisée. Le processeur HP3/NFCR2 peut ainsi disposer de données de personnalisation fournies par l'organisme qui contrôle le serveur BS, ces données pouvant être les mêmes données de personnalisation que celles mémorisées par le processeur 4.

Si une application adéquate est préalablement installée dans le processeur HP3/NFCR2, une transaction du même type que celle qui peut être établie entre le processeur 4 et le terminal PT, peut ensuite être exécutée. Ainsi, aux étapes S11 et S36, une transaction TR2 peut être établie entre le processeur HP3/NFCR2 et un lecteur sans contact par exemple prévu dans le terminal PT.

Pour augmenter la sécurité du procédé, l'organisme peut envoyer, par exemple par l'intermédiaire du serveur BS, un code d'activation secret CSA à l'utilisateur identifié grâce à la transaction TR1. Pour activer l'application et ainsi valider la personnalisation, l'utilisateur doit ensuite déclencher la transaction TR2 au cours de laquelle il fournit le code d'activation au processeur HP3/NFCR2 par exemple au moyen du clavier du terminal MP.

L'application peut être préalablement installée dans le processeur HP3/NFCR2 ou chargée à partir d'un lecteur sans contact.

La transmission entre le processeur HP3/NFCR2 et le serveur BS à l'étape S7 peut aussi être effectuée par l'intermédiaire du terminal PT et d'une liaison sans contact, si le terminal PT dispose de moyens de transmission sans contact. Le terminal PT reçoit alors les données du processeur NFCR2 et les retransmet ensuite vers le serveur BS.

La transmission entre le serveur BS et le terminal mobile MP à l'étape S26 peut également être réalisée d'une manière analogue par l'intermédiaire du terminal PT et d'une liaison sans contact entre le terminal PT et le processeur NFCR2. Cette transmission peut aussi être réalisée d'une manière différée, par l'intermédiaire d'une carte à mémoire de personnalisation PCD sans contact, dans laquelle sont mémorisées les données à transmettre, cette carte étant remise à l'utilisateur par l'organisme contrôlant le serveur BS. La carte à mémoire PCD est transmise à l'utilisateur par exemple par la poste, et peut être lue directement par le processeur NFCR2 placé à proximité de la carte.

La carte à mémoire de personnalisation PCD peut également être une carte avec contact. Ainsi, le terminal PT qui dispose alors de moyens de transmission sans contact, lit les informations mémorisées dans la carte PCD et les transmet par une liaison sans contact au processeur NFCR2.

Les étapes de chiffrement S24 et de déchiffrement S10 peuvent également utiliser une combinaison de chiffrement symétrique et asymétrique. Ainsi, à l'étape S24, une clé secrète K est générée et est utilisée pour chiffrer les données FPI à l'aide d'un algorithme de chiffrement symétrique. La clé K est chiffrée de manière asymétrique en utilisant la clé publique PKF. Les données chiffrées CFP et la clé secrète chiffrée CK sont transmises à l'étape S26 au processeur HP3/NFCR2. A l'étape S10, le processeur HP3/NFCR2 utilise la clé privée SKF pour déchiffrer la clé secrète K, puis utilise la clé K déchiffrée pour déchiffrer les données de personnalisation déchiffrées FPI.

A l'étape S33, la donnée secrète R peut être fournie à l'utilisateur d'une autre manière que par affichage sur un écran. Ainsi, elle peut être imprimée sur un ticket soit en clair, soit sous la forme d'un code optique (par exemple un code à barre) qui est ensuite introduit d'une manière appropriée dans le terminal mobile MP. A cet effet, le terminal MP peut par exemple être équipé d'un objectif d'appareil photo ou de caméra et d'un module logiciel de reconnaissance de formes imprimées.

Il peut être également prévu que les données transmises à l'étape S7 par le processeur HP3/NFCR2 soient préalablement chiffrées par le processeur HP3/NFCR2 ou le processeur HP1 avec la clé publique PKB du serveur BS.

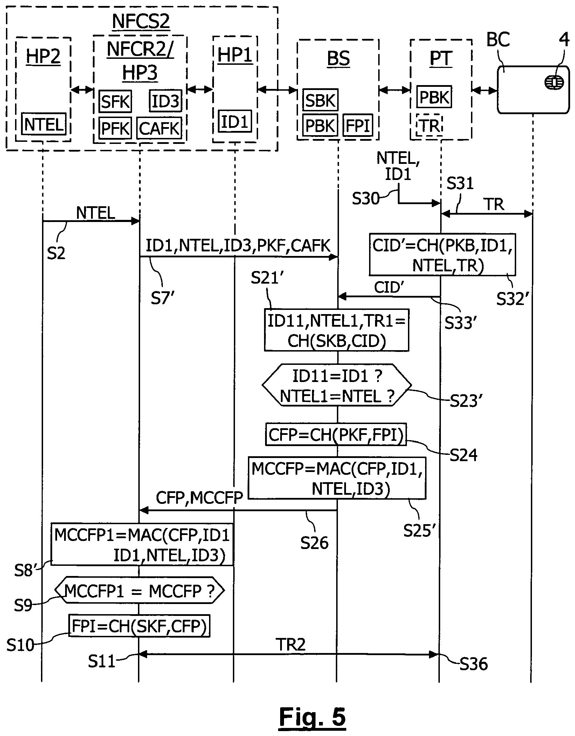

La figure 5 représente une séquence d'échanges de données d'un autre mode de réalisation du procédé de personnalisation du processeur hôte HP3 ou NFCR2. Par rapport à la séquence de la figure 4, la paire de clés PKF, SKF n'est pas générée par le processeur HP3/NFCR2 (absence d'étape S1), mais y a été insérée lors d'une étape de pré personnalisation du processeur avec un certificat CAFK vérifiable, garantissant l'authenticité des clés. Cette séquence ne comporte pas non plus de génération et d'utilisation d'une donnée secrète R.

Cette séquence d'échange comprend donc l'étape S2 exécutée par le processeur HP3/NFCR2 et les étapes S30, S31 exécutées par le serveur distant BS. A l'étape suivante S32, le terminal PT chiffre les données d'identification ID1, NTEL reçues à l'étape S30 et les informations de transaction TR en utilisant la clé publique PKB du serveur distant BS et envoie le résultat chiffré CID' au serveur BS à l'étape S33'.

A l'étape S21', le serveur BS reçoit et déchiffre les informations transmises par le terminal PT. Le serveur distant dispose ainsi des données déchiffrées ID11, NTEL1 et TR1.

Parallèlement, à l'étape S7', le processeur HP3/NFCR2 envoie au serveur distant BS les identifiants ID1, NTEL du terminal mobile MP, ainsi que sa clé publique PFK, le certificat CAFK associé, et éventuellement son identifiant ID3. Cette transmission peut être effectuée par l'établissement d'une liaison de transmission de données ou la transmission d'un message de type SMS par l'intermédiaire du réseau TN. Cette transmission peut aussi être effectuée par l'établissement d'une liaison sans contact avec le terminal PT qui retransmet les informations reçues au serveur BS par l'intermédiaire du réseau BN.

A l'étape S23', le serveur BS compare les données d'identification reçues ID1, NTEL avec les données d'identification ID11, NTEL1 qu'il a déchiffrées, et vérifie le certificat CAFK associé à la clé PFK. Si ces données correspondent, et si le certificat est valide, il exécute les étapes S24 et S26 précédemment décrites et S25'. Le processeur HP3/NFCR2 exécute alors les étapes S8' et les étapes S9 à S11 précédemment décrites. Les étapes S25' et S8' diffèrent des étapes S25 et S8 simplement en ce qu'elles ne font pas intervenir de donnée secrète R.

Comme précédemment, les étapes de chiffrement S24 et de déchiffrement S10 peuvent être effectuées en combinant des algorithmes symétrique et asymétrique. Par ailleurs, les transmissions effectuées aux étapes S7' et S26 peuvent être effectuées des différentes manières précédemment décrites en référence à la figure 4, par l'intermédiaire d'une liaison sans contact avec le terminal PT et/ou d'une carte à mémoire de personnalisation PCD. Les données transmises à l'étape S7' peuvent également être transmises sous forme chiffrée à l'aide de la clé publique PKB du serveur BS.

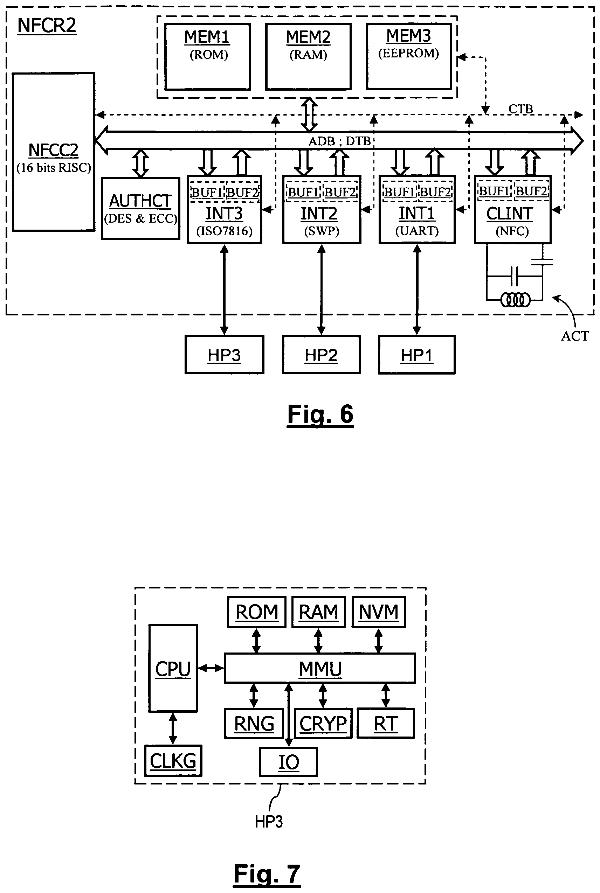

La figure 6 représente un exemple d'architecture matérielle du composant NFCR2 de la figure 3. Le composant comprend :
- le processeur NFCC2 et l'interface CLINT déjà décrits, ainsi que le dispositif d'horloge CLKD (qui demeure optionnel si le second aspect de l'invention n'est pas mis en oeuvre),
- un plan mémoire comprenant une mémoire programme MEM1 de type ROM (Read Only Memory), une mémoire de données MEM2 de type RAM (Random Access Memory), et une mémoire effaçable et programmable électriquement MEM3 de type EEPROM dans laquelle la table de routage RT est enregistrée et dans laquelle la table de correspondance éventuellement utilisée par l'organe DTGEN peut également être enregistrée,
- un port de connexion INT1 de type UART (Universal Asynchronous Receiving Transmitting), auquel le processeur hôte HP1 est ici connecté,
- un port de connexion INT2 de type ISO7816 auquel le processeur hôte HP2 est ici connecté (le processeur HP2 étant supposé ici être une carte SIM),
- un port de connexion INT3 de type SWP (Single Wire Protocol) permettant de connecter le processeur hôte HP3,
- un bus de données DTB et un bus d'adresse ADB reliant le plan mémoire, le processeur NFCC2, l'interface CLINT et les ports INT1, INT2, INT3, et
- un bus de contrôle CTB permettant au processeur NFCC2 de contrôler et d'accéder à ces divers éléments en lecture et/ou écriture.

Il sera noté que les bus ADB, DTB, CTB et les interfaces INT1 à INT3 forment ensemble ce qui a été précédemment désigné comme le chemin de données global GP du système NFC (fig. 4).

L'interface CLINT et les ports INT1, INT2, INT3 comportent chacun un tampon d'entrée BUF1 à entrée parallèle et un tampon de sortie BUF2 à sortie parallèle accessible en écriture, respectivement en lecture, via le bus de données et le bus d'adresse. L'échange de données formant les commandes de routage ou les trames de données entre les processeurs hôtes HP1, HP2, HP3 et le processeur NFCC2 ou l'interface CLINT s'effectue ainsi par blocs de données de la taille des tampons BUF1, BUF2, et est cadencé par le processeur NFCC2.

Le processeur NFCR2 peut être sécurisé et comprendre en outre un circuit d'authentification et de correction d'erreur AUTHCT comprenant des algorithmes DES (Data Encryption Standard) et ECC (Elliptic Curve Cryptography), ou d'autres algorithmes de cryptographie. Dans ce cas, l'exécution de la séquence de la figure 4 ou 5 ne requiert pas la présence du processeur hôte HP3 et donc la présente du port INT3.

La figure 7 représente un exemple d'architecture matérielle d'un processeur hôte sécurisé tel que le processeur hôte HP3 présent dans le système NFC. Sur la figure 7, le processeur HP3 comprend une unité de traitement CPU à une ou plusieurs banques de registres, différentes mémoires volatile RAM, en lecture seule ROM, et non volatiles NVM par exemple du type EEPROM ou Flash, une unité de gestion de la mémoire MMU, un générateur de signal d'horloge CLKG, des interfaces d'entrée/sortie IO et d'émission réception RT, par exemple du type UART, des circuits de calcul spécialisés, et notamment un circuit de génération de nombres aléatoire RGEN, et un circuit de calcul cryptographique CRYP.

Il apparaîtra clairement à l'homme de l'art que la présente invention est susceptible de diverses variantes de réalisation et d'applications. En particulier, l'invention n'est pas limitée à une application de paiement. Elle peut également s'appliquer d'une manière plus générale à toute personnalisation d'un processeur NFC d'un système NFC nécessitant de préserver et garantir la confidentialité et l'authenticité des données de personnalisation. Ainsi, elle peut s'appliquer notamment au transfert de d'informations d'identité d'une personne, dans le cadre d'une application de vérification d'identité. Les informations d'identité peuvent comporter une photo d'identité et des données biométriques.

Par ailleurs, le serveur BS peut plus généralement être constitué d'une simple unité de traitement sécurisée ayant accès aux données relatives aux utilisateurs nécessaires à l'initiation et à la gestion de transactions liées à l'application installée dans le processeur sécurisé HP3/NFCR2 ou dans le processeur 4.

D'autre part, les clés de chiffrement PKF, SKF ne sont pas nécessairement des clés d'un algorithme cryptographique asymétrique. Il peut être envisagé par exemple que le processeur HP3/NFCR2 transmette au serveur BS d'une manière sécurisée une clé secrète à utiliser pour chiffrer les données de personnalisation à transmettre à l'étape S26.

## Revendications

1. Procédé de personnalisation d'un processeur sécurisé dans un système NFC pour exécuter une application sécurisée,
**caractérisé en ce qu'**il comprend des étapes consistant à :
mettre en communication un support de stockage (4) mémorisant de manière sécurisée des données d'identification (TR) d'un utilisateur, avec une unité de traitement (BS),
transmettre à l'unité de traitement les données d'identification de l'utilisateur stockées sur le support de stockage,
obtenir par l'unité de traitement des données de personnalisation (FPI) correspondant aux données d'identification de l'utilisateur et distinctes de celles-ci,
obtenir par l'unité de traitement des données d'identification (ID1, NTEL, ID3, PKF) d'un système NFC (NFCS2) reçues de l'utilisateur et du système NFC, les données d'identification du système NFC étant distinctes des données d'identification de l'utilisateur, le système NFC comprenant un processeur sécurisé (HP3/NFCR2), les données d'identification du système NFC comprenant une clé de chiffrement (PKF) du processeur sécurisé,
vérifier par l'unité de traitement une correspondance entre les données d'identification du système NFC, reçues de l'utilisateur et celles reçues du système NFC,
chiffrer par l'unité de traitement les données de personnalisation en utilisant la clé de chiffrement, et transmettre au système NFC les données de personnalisation chiffrées (CFP),
recevoir par le processeur sécurisé les données de personnalisation chiffrées, et déchiffrer les données de personnalisation, et
mémoriser d'une manière sécurisée les données de personnalisation par le processeur sécurisé.

2. Procédé selon la revendication 1, dans lequel les données d'identification de l'utilisateur (TR) sont transmises à l'unité de traitement (BS) en mettant en communication le support de stockage (BC) avec un terminal (PT) connecté à l'unité de traitement.

3. Procédé selon la revendication 1 ou 2, dans lequel les données d'identification (ID1, NTEL) du système NFC (NFCS2) peuvent comprendre un identifiant (ID3) d'un processeur NFC (NFCR2) et/ou d'un processeur hôte (HP3) couplé au processeur NFC et sont au moins partiellement fournies par l'utilisateur à un terminal (PT) connecté à l'unité de traitement (BS) ou transmises par une liaison sans contact établie entre le processeur sécurisé et le terminal.

4. Procédé selon l'une des revendications 1 à 3, comprenant des étapes de génération d'une donnée secrète commune (R) partagée par l'unité de traitement (BS) et un terminal (PT) connecté à l'unité de traitement et auquel a accès l'utilisateur, et de fourniture de la donnée secrète à l'utilisateur par le terminal, puis au système NFC (NFCS2) par l'utilisateur.

5. Procédé selon la revendication 4, dans lequel le système NFC (NFCR2) calcule une valeur condensée (MC) en appliquant une fonction cryptographique déterministe (MAC) aux données d'identification (ID1, NTEL, ID3, PKF) du système NFC et à la donnée secrète (R) et transmet la valeur condensée calculée avec les données d'identification du système NFC à l'unité de traitement (BS), et l'unité de traitement vérifie la valeur condensée en appliquant la fonction cryptographique aux données d'identification du système NFC (ID11, NTEL1, ID3, PKF) et à la donnée secrète (R) qu'il a générée, et arrête le traitement de personnalisation si la valeur condensée (MC) reçue est différente de la valeur condensée calculée (MC1).

6. Procédé selon l'une des revendications 1 à 5, dans lequel le système NFC (NFCS2) est intégré dans un terminal de télécommunication mobile (MP), et les données de personnalisation chiffrées (CFP) sont transmises par l'unité de traitement (BS) au système NFC par l'intermédiaire d'un réseau de télécommunication mobile (TN).

7. Procédé selon l'une des revendications 1 à 5, dans lequel les données de personnalisation chiffrées (CFP) sont transmises au système NFC (NFCS2) par une liaison sans contact établie entre le système NFC et un terminal (PT) connecté à l'unité de traitement ou une carte à mémoire (PCD) remise à l'utilisateur et comportant une interface NFC ou une carte à mémoire connectée au terminal.

8. Procédé selon l'une des revendications 1 à 7, dans lequel les données de personnalisation chiffrées sont transmises avec une valeur condensée (MCCFP) obtenue par application d'une fonction cryptographique déterministe (MAC) aux données de personnalisation chiffrées (CFP) et aux données d'identification (ID1, NTEL, ID3) du système NFC (NFCS2), le système NFC vérifiant la valeur condensée reçue (MCCFP) en appliquant la fonction cryptographique aux données de personnalisation chiffrées reçues de l'unité de traitement (BS) et aux données d'identification du système NFC, et arrête le traitement de personnalisation si la valeur (MCCFP) condensée reçue est différente de la valeur calculée condensée (MCCFP1).

9. Procédé selon l'une des revendications 1 à 8, dans lequel la clé de chiffrement du processeur sécurisé (HP3/NFCR2) comprend une clé publique (PKF) et une clé secrète (SKF) correspondante qui peuvent être générées localement par le processeur sécurisé et qui peuvent être insérées dans le processeur sécurisé (HP3/NFCR2) en association avec un certificat (CAFK) émis par une autorité de certification.

10. Unité de traitement pour personnaliser un processeur sécurisé d'un système NFC afin d'exécuter une application sécurisée,
**caractérisée en ce qu'**elle est configurée pour :
obtenir des données d'identification d'un utilisateur (TR) stockées de manière sécurisée sur un support de stockage (4), et des données de personnalisation (FPI) correspondant aux données d'identification de l'utilisateur et distinctes de celles-ci,
obtenir des données d'identification (ID1, NTEL, ID3, PKF) d'un système NFC (NFCS2) reçues de l'utilisateur et du système NFC, les données d'identification du système NFC étant distinctes des données d'identification de l'utilisateur, les données d'identification du système NFC comprenant une clé de chiffrement (PKF) d'un processeur sécurisé du système NFC,
vérifier une correspondance entre les données d'identification du système NFC, reçues de l'utilisateur et celles reçues du système NFC, et
chiffrer les données de personnalisation en utilisant la clé de chiffrement, et transmettre au système NFC les données de personnalisation chiffrées (CFP).

11. Unité de traitement selon la revendication 10, dans lequel les données d'identification (ID1, NTEL, ID3, PKF) du système NFC (NFCS2) comprennent un identifiant (ID3) d'un processeur NFC (NFCR2) et/ou d'un processeur hôte (HP3) couplé au processeur NFC.

12. Unité de traitement selon la revendication 10 ou 11, configurée pour générer une donnée secrète commune (R) avec un terminal (PT) connecté à l'unité de traitement (BS), la donnée secrète étant partagée par l'unité de traitement et le terminal (PT).

13. Unité de traitement selon la revendication 12, configurée pour recevoir et vérifier une valeur condensée (MC) obtenue en appliquant une fonction cryptographique aux données d'identification du système NFC (ID11, NTEL1, ID3, PKF) et à la donnée secrète (R) qu'il a générée, et pour arrêter le traitement de personnalisation si la valeur condensée (MC) reçue est différente de la valeur condensée calculée (MC1).

14. Unité de traitement selon l'une des revendications 10 à 13, configurée pour transmettre les données de personnalisation chiffrées (CFP) au système NFC (NFCS2) par l'intermédiaire d'un réseau de télécommunication mobile (TN) ou d'un terminal (PT) connecté à l'unité de traitement par un réseau (BN) et au système NFC par une liaison sans contact.

15. Unité de traitement selon l'une des revendications 10 à 14, configurée pour transmettre les données de personnalisation chiffrées (CFP) avec une valeur condensée (MCCFP) obtenue par application d'une fonction cryptographique déterministe (MAC) aux données de personnalisation chiffrées (CFP) et aux données d'identification (ID1, NTEL, ID3) du système NFC (NFCS2).

16. Système de personnalisation d'un processeur sécurisé dans un système NFC pour exécuter une application sécurisée,
**caractérisé en ce qu'**il comprend :
un système NFC (NFCS2) d'un utilisateur, comprenant un processeur sécurisé (HP3/NFCR2),
un support de stockage (4) mémorisant de manière sécurisée des données d'identification de l'utilisateur, et
une unité de traitement (BS) selon l'une des revendications 10 à 15,
le processeur sécurisé étant configuré pour recevoir des données de personnalisation chiffrées, déchiffrer les données de personnalisation, et mémoriser d'une manière sécurisée les données de personnalisation.

17. Système selon la revendication 16, comprenant un terminal (PT) connecté à l'unité de traitement (BS) et au support de stockage (4), le terminal étant configuré pour extraire du support de stockage les données d'identification de l'utilisateur (TR) et pour les transmettre à l'unité de traitement (BS).

18. Système selon l'une des revendications 16 et 17, comprenant un terminal (PT) connecté à l'unité de traitement (BS), le terminal étant configuré pour recevoir au moins partiellement les données d'identification (ID1, NTEL, ID3, PKF) du système NFC (NFCS2) soit de l'utilisateur, soit du processeur sécurisé (HP3/NFCR2) par l'intermédiaire d'une liaison sans contact du système NFC, les données d'identification du système NFC pouvant comprendre un identifiant (ID3) d'un processeur NFC (NFCR2) et/ou d'un processeur hôte (HP3) couplé au processeur NFC.

19. Système selon l'une des revendications 16 à 18, comprenant un terminal (PT) connecté à l'unité de traitement (BS) et auquel a accès l'utilisateur, le terminal et l'unité de traitement étant configurés pour générer une donnée secrète commune (R) partagée par l'unité de traitement (BS) et le terminal (PT), le terminal étant configuré pour fournir la donnée secrète à l'utilisateur, le système NFC (NFCS2) étant configuré pour recevoir la donnée secrète de l'utilisateur.

20. Système selon revendication 19, dans lequel le système NFC (NFCR2) est configuré pour calculer une valeur condensée (MC) en appliquant une fonction cryptographique déterministe (MAC) aux données d'identification (ID1, NTEL, ID3, PKF) du système NFC et à la donnée secrète (R), et pour transmettre la valeur condensée calculée avec les données d'identification du système NFC à l'unité de traitement (BS).

21. Système selon l'une des revendications 16 à 20, dans lequel le système NFC (NFCS2) est intégré dans un terminal de télécommunication mobile (MP).

22. Système selon l'une des revendications 16 à 20, comprenant un terminal (PT) connecté à l'unité de traitement (BS) et comportant une interface NFC en communication par une liaison sans contact avec le système NFC (NFCS2), le terminal et le système NFC étant configurés pour que les données de personnalisation chiffrées (CFP) soient transmises de l'unité de traitement au système NFC par la liaison sans contact par l'intermédiaire du terminal.

23. Système selon l'une des revendications 16 à 20, comprenant une carte à mémoire (PCD) remise à l'utilisateur et susceptible d'être mise en communication par une liaison sans contact avec le système NFC soit directement, soit par l'intermédiaire d'un terminal (PT) auquel la carte à mémoire est connectée et comportant une interface NFC en communication par une liaison sans contact avec le système NFC (NFCS2), la carte à mémoire étant configurée pour mémoriser les données de personnalisation chiffrées (CFP) et les transmettre au système NFC (NFCS2).

24. Système selon l'une des revendications 16 à 23, dans lequel le système NFC est configuré pour vérifier la valeur condensée reçue (MCCFP) en appliquant la fonction cryptographique aux données de personnalisation chiffrées reçues de l'unité de traitement (BS) et aux données d'identification du système NFC, et pour arrêter le traitement de personnalisation si la valeur (MCCFP) condensée reçue est différente de la valeur calculée condensée (MCCFP1).

25. Système selon l'une des revendications 16 à 24, dans lequel le processeur sécurisé (HP3/NFCR2) est configuré pour générer la clé publique (PKF) et la clé secrète (SKF) correspondante.

26. Système selon l'une des revendications 16 à 24, dans lequel le processeur sécurisé (HP3/NFCR2) est configuré pour recevoir la clé publique (PKF) et la clé secrète (SKF) correspondante en association avec un certificat émis par une autorité de certification.

## Patentansprüche

1. Verfahren zur Personalisierung eines gesicherten Prozessors in einem NFC-System zur Ausführung einer gesicherten Anwendung,
**dadurch gekennzeichnet, dass** es die folgenden Schritte umfasst:
Herstellen einer Verbindung zwischen einem Speichermedium (4), das Identifizierungsdaten (TR) eines Nutzers sicher speichert, und einer Verarbeitungseinheit (BS),
Übertragen der im Speichermedium gespeicherten Identifizierungsdaten des Nutzers an die Verarbeitungseinheit,
Erfassen von Personalisierungsdaten (FPI) durch die Verarbeitungseinheit, die den Identifizierungsdaten des Nutzers entsprechen und getrennt von diesen.
Erfassen der Identifizierungsdaten (ID1, NTEL, ID3, PKF) eines NFC-Systems (NFCS2), die vom Nutzer und vom NFC-System empfangen werden, durch die Verarbeitungseinheit, wobei sich die Identifizierungsdaten des NFC-Systems von den Identifizierungsdaten des Nutzers unterscheiden, wobei das NFC-System einen gesicherten Prozessor (HP3/NFCR2) umfasst, wobei die Identifizierungsdaten des NFC-Systems einen Chiffrierschlüssel (PKF) des gesicherten Prozessors umfassen,
Überprüfen einer Übereinstimmung zwischen den Identifizierungsdaten des NFC-Systems, die vom Nutzer empfangen werden, und jenen, die vom NFC-System empfangen werden, durch die Verarbeitungseinheit,
Verschlüsseln der Personalisierungsdaten durch die Verarbeitungseinheit unter Verwendung des Chiffrierschlüssels und Übertragen der verschlüsselten Personalisierungsdaten (CFP) an das NFC-System,
Empfangen der verschlüsselten Personalisierungsdaten durch den gesicherten Prozessor und Entschlüsseln der Personalisierungsdaten und
Gesichertes Speichern der Personalisierungsdaten durch den gesicherten Prozessor.

2. Verfahren nach Anspruch 1, wobei dem die Identifizierungsdaten des Nutzers (TR) an die Verarbeitungseinheit (BS) übertragen werden, indem eine Verbindung zwischen dem Speichermedium (BC) und einem Endgerät (PT) hergestellt wird, welches mit der Verarbeitungseinheit verbunden ist.

3. Verfahren nach Anspruch 1 oder 2, wobei die Identifizierungsdaten (ID1, NTEL) des NFC-Systems (NFCS2) einen Benutzernamen (ID3) eines NFC-Prozessors (NFCR2) und/ oder eines Host-Prozessors (HP3) umfassen können, der an den NFC-Prozessor gekoppelt ist, und zumindest teilweise durch den Nutzer einem Endgerät (PT), das mit der Verarbeitungseinheit (BS) verbunden ist, bereitgestellt werden oder durch eine kontaktlose Verknüpfung übertragen werden, die zwischen dem gesicherten Prozessor und dem Endgerät aufgebaut wird.

4. Verfahren nach einem der Ansprüche 1 bis 3, das Schritte zur Erzeugung einer gemeinsamen geheimen Information (R) umfasst, die von der Verarbeitungseinheit (BS) und einem Endgerät (PT) geteilt wird, das mit der Verarbeitungseinheit verbunden ist und auf das der Nutzer zugreifen kann, und zur Bereitstellung der geheimen Information für den Nutzer durch das Endgerät, und dann für das NFC-System (NFCS2) durch den Nutzer.

5. Verfahren nach Anspruch 4, wobei das NFC-System (NFCR2) einen kondensierten Wert (MC) durch Anwendung einer deterministischen kryptografischen Funktion (MAC) auf die Identifizierungsdaten (ID1, NTEL, ID3, PKF) des NFC-Systems und auf die geheime Information (R) berechnet, und den mit den Identifizierungsdaten des NFC-Systems berechneten kondensierten Wert an die Verarbeitungseinheit (BS) übermittelt, und die Verarbeitungseinheit den kondensierten Wert durch Anwenden der kryptografischen Funktion auf die Identifizierungsdaten des NFC-Systems (ID11, NTEL1, ID3, PKF) und auf die von ihm erzeugte geheime Information (R) überprüft und die Personalisierungsbearbeitung abbricht, wenn sich der empfangene kondensierte Wert (MC) von dem berechneten kondensierten Wert (MC1) unterscheidet.

6. Verfahren nach einem der Ansprüche 1 bis 5, wobei das NFC-System (NFCS2) in ein mobiles Telekommunikationsendgerät (MP) integriert wird, und die verschlüsselten Personalisierungsdaten (CFP) durch die Verarbeitungseinheit (BS) über ein mobiles Telekommunikationsnetzwerk (TN) an das NFC-System übertragen werden.

7. Verfahren nach einem der Ansprüche 1 bis 5, wobei die Übertragung der verschlüsselten Personalisierungsdaten (CFP) an das NFC-System (NFCS2) durch eine kontaktlose Verknüpfung zwischen dem NFC-System und einem Endgerät (PT) erfolgt, das mit der Verarbeitungseinheit verbunden ist, oder eine Speicherkarte (PCD), die dem Nutzer übergeben wird und eine NFC-Schnittstelle oder eine Speicherkarte umfasst, die mit dem Endgerät verbunden ist.

8. Verfahren nach einem der Ansprüche 1 bis 7, wobei die verschlüsselten Personalisierungsdaten mit einem kondensierten Wert (MCCFP) übertragen werden, der durch Anwenden einer deterministischen kryptografischen Funktion (MAC) auf die verschlüsselten Personalisierungsdaten (CFP) und auf die Identifizierungsdaten (ID1, NTEL, ID3) des NFC-Systems (NFCS2) gewonnen wird, wobei das NFC-System den empfangenen kondensierten Wert (MCCFP) durch Anwenden der kryptografischen Funktion auf die verschlüsselten Personalisierungsdaten, die von der Verarbeitungseinheit (BS) empfangen werden, und auf die Identifizierungsdaten des NFC-Systems überprüft, und die Personalisierungsbearbeitung einstellt, wenn sich der empfangene kondensierte Wert (MCCFP) vom berechneten kondensierten Wert (MCCFP1) unterscheidet.

9. Verfahren nach einem der Ansprüche 1 bis 8, wobei der Chiffrierschlüssel des gesicherten Prozessors (HP3/NFCR2) einen öffentlichen Schlüssel (PKF) und einen entsprechenden geheimen Schlüssel (SKF) umfasst, die lokal durch den gesicherten Prozessor erzeugt werden können, und die in den gesicherten Prozessor (HP3/NFCR2) in Verbindung mit einem Zertifikat (CAFK) eingegeben werden können, das durch eine Zertifizierungsbehörde ausgestellt wird.

10. Verarbeitungseinheit zur Personalisierung eines gesicherten Prozessors eines NFC-Systems zur Ausführung einer gesicherten Anwendung ,
**dadurch gekennzeichnet, dass** sie so konfiguriert ist, um:
Identifizierungsdaten eines Nutzers (TR) zu erfassen, die in einem Speichermedium (4) sicher gespeichert sind, und Personalisierungsdaten (FPI), die den Identifizierungsdaten des Nutzers entsprechen, und getrennt von diesen zu erfassen,
Identifizierungsdaten (ID1, NTEL, ID3, PKF) eines NFC-Systems (NFCS2) zu erfassen, die vom Nutzer und vom NFC-System empfangen werden, wobei sich die Identifizierungsdaten des NFC-Systems von den Identifizierungsdaten des Nutzers unterscheiden, wobei das NFC-System einen gesicherten Prozessor (HP3/NFCR2) umfasst, wobei die Identifizierungsdaten des NFC-Systems einen Chiffrierschlüssel (PKF) eines gesicherten Prozessors des NFC-Systems umfassen,
eine Übereinstimmung zwischen den Identifizierungsdaten des NFC-Systems, die vom Nutzer empfangen werden und jenen, die vom NFC-System empfangen werden, zu überprüfen, und
die Personalisierungsdaten unter Verwendung des Chiffrierschlüssels zu verschlüsseln und die verschlüsselten Personalisierungsdaten (CFP) an das NFC-System zu übertragen.

11. Verarbeitungseinheit nach Anspruch 10, wobei die Identifizierungsdaten (ID1, NTEL, ID3, PKF) des NFC-Systems (NFCS2) einen Benutzernamen (ID3) eines NFC-Prozessors (NFCR2) und/ oder eines Host-Prozessors (HP3) umfassen, der an den NFC-Prozessor gekoppelt ist.

12. Verarbeitungseinheit nach Anspruch 10 oder 11, konfiguriert zum Erzeugen einer gemeinsamen geheimen Information (R) mit einem Endgerät (PT), das mit der Verarbeitungseinheit (BS) verbunden ist, wobei die geheime Information (R) von der Verarbeitungseinheit und dem Endgerät (PT) geteilt wird.

13. Verarbeitungseinheit nach Anspruch 12, konfiguriert zum Empfangen und Überprüfen eines kondensierten Werts (MC), der durch Anwenden einer kryptografischen Funktion auf die Identifizierungsdaten des NFC-Systems (ID11, NTEL1, ID3, PKF) und auf die von ihm erzeugte geheime Information (R) erhalten wird, und zum Einstellen der Personalisierungsbearbeitung, wenn sich der empfangene kondensierte Wert (MC) von dem berechneten kondensierten Wert (MC1) unterscheidet.

14. Verarbeitungseinheit nach einem der Ansprüche 10 bis 13, konfiguriert zum Übertragen der verschlüsselten Personalisierungsdaten (CFP) an das NFC-System (NFCS2) über ein mobiles Telekommunikationsnetzwerk (TN) oder ein Endgerät (PT), das durch ein Netzwerk (BN) mit der Verarbeitungseinheit und durch eine kontaktlose Verknüpfung mit dem NFC-System verbunden ist.

15. Verarbeitungseinheit nach einem der Ansprüche 10 bis 14, konfiguriert zum Übertragen der verschlüsselten Personalisierungsdaten (CFP) mit einem kondensierten Wert (MCCFP), der durch Anwenden einer deterministischen kryptografischen Funktion (MAC) auf die verschlüsselten Personalisierungsdaten (CFP) und auf die Identifizierungsdaten (ID1, NTEL, ID3) des NFC-Systems (NFCS2) erhalten wird.

16. System zur Personalisierung eines gesicherten Prozessors in einem NFC-System zur Ausführung einer gesicherten Anwendung,
**dadurch gekennzeichnet, dass** es Folgendes umfasst:
ein NFC-System (NFCS2) eines Nutzers, das einen gesicherten Prozessor (HP3/NFCR2) umfasst,
ein Speichermedium (4), das Identifizierungsdaten des Nutzers sicher speichert, und
eine Verarbeitungseinheit (BS) nach einem der Ansprüche 10 bis 15,
wobei der gesicherte Prozessor so konfiguriert ist, um verschlüsselte Personalisierungsdaten zu empfangen, die Personalisierungsdaten zu entschlüsseln und die Personalisierungsdaten sicher zu speichern.

17. System nach Anspruch 16, umfassend ein Endgerät (PT), das mit der Verarbeitungseinheit (BS) und mit dem Speichermedium (4) verbunden ist, wobei das Endgerät so konfiguriert ist, um aus dem Speichermedium die Identifizierungsdaten des Nutzers (TR) zu extrahieren und um sie an die Verarbeitungseinheit (BS) zu übertragen.

18. System nach einem der Ansprüche 16 und 17, umfassend ein Endgerät (PT), das mit der Verarbeitungseinheit (BS) verbunden ist, wobei das Endgerät so konfiguriert ist, um zumindest teilweise die Identifizierungsdaten (ID1, NTEL, ID3, PKF) des NFC-Systems (NFCS2) entweder vom Nutzer oder vom gesicherten Prozessor (HP3/NFCR2) über eine kontaktlose Verknüpfung des NFC-Systems zu empfangen, wobei die Identifizierungsdaten des NFC-Systems einen Benutzernamen (ID3) eines NFC-Prozessors (NFCR2) und/ oder eines Host-Prozessors (HP3) umfassen können, der an den NFC-Prozessor gekoppelt ist.

19. System nach einem der Ansprüche 16 bis 18, umfassend ein Endgerät (PT), das mit der Verarbeitungseinheit (BS) verbunden ist und auf das der Nutzer zugreifen kann, wobei das Endgerät und die Verarbeitungseinheit so konfiguriert sind, um eine gemeinsame geheime Information (R) zu erzeugen, die von der Verarbeitungseinheit (BS) und dem Endgerät (PT) geteilt wird, wobei das Endgerät konfiguriert ist, um dem Nutzer die geheime Information bereitzustellen, wobei das NFC-System (NFCS2) konfiguriert ist, um die geheime Information des Nutzers zu empfangen.

20. System nach Anspruch 19, wobei das NFC-System (NFCR2) so konfiguriert ist, um einen kondensierten Wert (MC) durch Anwenden einer deterministischen kryptografischen Funktion (MAC) auf die Identifizierungsdaten (ID1, NTEL, ID3, PKF) des NFC-Systems und auf die geheime Information (R) zu berechnen und um den mit den Identifizierungsdaten des NFC-Systems berechneten kondensierten Wert an die Verarbeitungseinheit (BS) zu übertragen.

21. System nach einem der Ansprüche 16 bis 20, wobei das NFC-System (NFCS2) in ein mobiles Telekommunikationsendgerät (MP) integriert ist.

22. System nach einem der Ansprüche 16 bis 20, umfassend ein Endgerät (PT), das mit einer Verarbeitungseinheit (BS) verbunden ist und eine NFC-Schnittstelle, die durch eine kontaktlose Verknüpfung mit dem NFC-System (NFCS2) kommuniziert, wobei das Endgerät und das NFC-System so konfiguriert sind, damit die verschlüsselten Personalisierungsdaten (CFP) von der Verarbeitungseinheit durch die kontaktlose Verknüpfung über das Endgerät an das NFC-System übertragen werden.

23. System nach einem der Ansprüche 16 bis 20, umfassend eine Speicherkarte (PCD), die dem Nutzer übergeben wird und durch eine kontaktlose Verknüpfung entweder direkt mit dem NFC-System verbunden werden kann oder über ein Endgerät (PT), mit dem die Speicherkarte verbunden ist, und eine NFC-Schnittstelle umfassend, die durch eine kontaktlose Verknüpfung mit dem NFC-System (NFCS2) verbunden ist, wobei die Speicherkarte konfiguriert ist, um die verschlüsselten Personalisierungsdaten (CFP) zu speichern und sie an das NFC-System (NFCS2) zu übertragen.

24. System nach einem der Ansprüche 16 bis 23, wobei das NFC-System konfiguriert ist, um den empfangenen kondensierten Wert (MCCFP) durch Anwenden der kryptografischen Funktion auf die verschlüsselten Personalisierungsdaten, die von der Verarbeitungseinheit (BS) empfangen werden, und auf die Identifizierungsdaten des NFC-Systems zu überprüfen, und die Personalisierungsverarbeitung einzustellen, wenn sich der empfangene kondensierte Wert (MCCFP) vom berechneten kondensierten Wert (MCCFP1) unterscheidet.

25. System nach einem der Ansprüche 16 bis 24, wobei der gesicherte Prozessor (HP3/NFCR2) so konfiguriert ist, um den öffentlichen Schlüssel (PKF) und den entsprechenden geheimen Schlüssel (SKF) zu erzeugen.

26. System nach einem der Ansprüche 16 bis 24, wobei der gesicherte Prozessor (HP3/NFCR2) so konfiguriert ist, um den öffentlichen Schlüssel (PKF) und den entsprechenden geheimen Schlüssel (SKF) in Verbindung mit einem von einer Zertifizierungsstelle ausgestellten Zertifikat zu empfangen.

## Claims

1. Method for personalizing a secure processor in an NFC system in order to execute a secure application,
**characterized in that** said method comprises the steps of:
establishing communication between a storage medium (4), which medium securely stores identification data (TR) of a user, and a processing unit (BS),
transmitting the identification data of the user, stored on the storage medium, to the processing unit,
obtaining, by means of the processing unit, personalization data (FPI) that correspond to the identification data of the user and that are different therefrom,
obtaining, by means of the processing unit, identification data (ID1, NTEL, ID3, PKF) of an NFC system (NFCS2) received from the user and from the NFC system, the identification data of the NFC system being different from the identification data of the user, the NFC system comprising a secure processor (HP3/NFCR2), and the identification data of the NFC system comprising a cryptographic key (PKF) of the secure processor,
verifying, by means of the processing unit, a correspondence between the identification data of the NFC system received from the user and those received from the NFC system,
encrypting the personalization data by means of the processing unit and using the cryptographic key, and transmitting the encrypted personalization data (CFP) to the NFC system, receiving, by means of the secure processor, the encrypted personalization data, and
decrypting the personalization data, and
storing the personalization data securely by means of the secure processor.

2. Method according to claim 1, wherein the identification data of the user (TR) are transmitted to the processing unit (BS) by establishing communication between the storage medium (BC) and a terminal (PT) that is connected to the processing unit.

3. Method according to either claim 1 or claim 2, wherein the identification data (ID1, NTEL) of the NFC system (NFCS2) may comprise an identifier (ID3) of an NFC processor (NFCR2) and/or of a host processor (HP3) that is coupled to the NFC processor, and said data are provided at least in part by the user to a terminal (PT) that is connected to the processing unit (BS), or are transmitted by means of a contactless connection established between the secure processor and the terminal.

4. Method according to any of claims 1 to 3, comprising the steps of generating a common item of secret data (R) shared by the processing unit (BS) and a terminal (PT) that is connected to the processing unit and that the user can access, and of the terminal providing the secret data to the user, and then the user providing said data to the NFC system (NFCS2).

5. Method according to claim 4, wherein the NFC system (NFCR2) calculates a hash value (MC) by applying a deterministic cryptographic function (MAC) to the identification data (ID1, NTEL, ID3, PKF) of the NFC system and to the secret data (R), and transmits the calculated hash value, together with the identification data of the NFC system, to the processing unit (BS), and the processing unit verifies the hash value by applying the cryptographic function to the identification data of the NFC system (ID11, NTEL1, ID3, PKF) and to the secret data (R) that it has generated, and stops the personalization processing if the received hash value (MC) is different from the calculated hash value (MC1).

6. Method according to any of claims 1 to 5, wherein the NFC system (NFCS2) is integrated in a mobile telecommunications terminal (MP), and the encrypted personalization data (CFP) are transmitted by the processing unit (BS) to the NFC system via a mobile telecommunications network (TN).

7. Method according to any of claims 1 to 5, wherein the encrypted personalization data (CFP) are transmitted to the NFC system (NFCS2) by means of a contactless connection established between the NFC system and a terminal (PT) connected to the processing unit, or a memory card (PCD) delivered to the user and comprising an NFC interface, or a memory card connected to the terminal.

8. Method according to any of claims 1 to 7, wherein the encrypted personalization data are transmitted together with a hash value (MCCFP) obtained by applying a deterministic cryptographic function (MAC) to the encrypted personalization data (CFP) and to the identification data (ID1, NTEL, ID3) of the NFC system (NFCS2), the NFC system verifying the received hash value (MCCFP) by applying the cryptographic function to the encrypted personalization data received from the processing unit (BS) and to the identification data of the NFC system, and stops the personalization processing if the received hash value (MCCFP) is different from the calculated hash value (MCCFP1).

9. Method according to any of claims 1 to 8, wherein the cryptographic key of the secure processor (HP3/NFCR2) comprises a public key (PKF) and a corresponding secret key (SKF) which can be generated locally by the secure processor and which can be inserted into the secure processor (HP3/NFCR2) in association with a certificate (CAFK) issued by a certification authority.

10. Processing unit for personalizing a secure processor of an NFC system in order to execute a secure application,
**characterized in that** said unit is configured to:
obtain identification data of a user (TR) stored securely on a storage medium (4), and
personalization data (FPI) that correspond to the identification data of the user and are different therefrom,
obtain identification data (ID1, NTEL, ID3, PKF) of an NFC system (NFCS2) received from the user and from the NFC system, the identification data of the NFC system being different from the identification data of the user, the identification data of the NFC system comprising a cryptographic key (PKF) of a secure processor of the NFC system,
verify a correspondence between the identification data of the NFC system received from the user and those received from the NFC system, and
encrypt the personalization data by using the cryptographic key, and transmit the encrypted personalization data (CFP) to the NFC system.

11. Processing unit according to claim 10, wherein the identification data (ID1, NTEL, ID3, PKF) of the NFC system (NFCS2) comprise an identifier (ID3) of an NFC processor (NFCR2) and/or of a host processor (HP3) that is coupled to the NFC processor.

12. Processing unit according to either claim 10 or claim 11, which unit is configured to generate an item of secret data (R) that is in common with a terminal (PT) connected to the processing unit (BS), the secret data being shared by the processing unit and the terminal (PT).

13. Processing unit according to claim 12, which unit is configured to receive and verify a hash value (MC) obtained by applying a cryptographic function to the identification data of the NFC system (ID11, NTEL1, ID3, PKF) and the secret data (R) that is has generated, and to stop the personalization processing if the received hash value (MC) is different from the calculated hash value (MC1).

14. Processing unit according to any of claims 10 to 13, which unit is configured to transmit the encrypted personalization data (CFP) to the NFC system (NFCS2) via a mobile telecommunications network (TN) or via a terminal (PT) that is connected to the processing unit by means of a network (BN) and to the NFC system by means of a contactless connection.

15. Processing unit according to any of claims 10 to 14, which unit is configured to transmit the encrypted personalization data (CFP) together with a hash value (MCCFP) obtained by applying a deterministic cryptographic function (MAC) to the encrypted personalization data (CFP) and the identification data (ID1, NTEL, ID3) of the NFC system (NFCS2).

16. System for personalizing a secure processor in an NFC system in order to execute a secure application,
**characterized in that** said system comprises:
an NFC system (NFCS2) of a user, comprising a secure processor (HP3/NFCR2),
a storage medium (4) that securely stores identification data of the user, and
a processing unit (BS) according to any of claims 10 to 15,
the secure processor being configured to received encrypted personalization data, to decrypt the personalization data, and to securely store the personalization data.

17. System according to claim 16, said system comprising a terminal (PT) that is connected to the processing unit (BS) and to the storage medium (4), the terminal being configured to extract the identification data of the user (TR) from the storage medium and to transmit said data to the processing unit (BS).

18. System according to either claim 16 or claim 17, said system comprising a terminal (PT) that is connected to the processing unit (BS), the terminal being configured to receive, at least in part, the identification data (ID1, NTEL, ID3, PKF) of the NFC system (NFCS2) either from the user or from the secure processor (HP3/NFCR2) via a contactless connection to the NFC system, it being possible for the identification data of the NFC system to comprise an identifier (ID3) of an NFC processor (NFCR2) and/or of a host processor (HP3) that is coupled to the NFC processor.

19. System according to any of claims 16 to 18, said system comprising a terminal (PT) that is connected to the processing unit (BS) and that the user can access, the terminal and the processing unit being configured to generate a common item of secret data (R) shared by the processing unit (BS) and the terminal (PT), the terminal being configured to provide the secret data to the user, and the NFC system (NFCS2) being configured to receive the secret data from the user.

20. System according to claim 19, wherein the NFC system (NFCR2) is configured to calculate a hash value (MC) by applying a deterministic cryptographic function (MAC) to the identification data (ID1, NTEL, ID3, PKF) of the NFC system and to the secret data (R), and to transmit the calculated hash value, together with the identification data of the NFC system, to the processing unit (BS).

21. System according to any of claims 16 to 20, wherein the NFC system (NFCS2) is integrated in a mobile telecommunications terminal (MP).

22. System according to any of claims 16 to 20, said system comprising a terminal (PT) that is connected to the processing unit (BS) and that comprises an NFC interface that communicates with the NFC system (NFCS2) via a contactless connection, the terminal and the NFC system being configured such that the encrypted personalization data (CFP) are transmitted from the processing unit to the NFC system by means of the contactless connection and via the terminal.

23. System according to any of claims 16 to 20, said system comprising a memory card (PCD) that is delivered to the user and is able to be brought into communication with the NFC system by means of a contactless connection, either directly or via a terminal (PT) to which the memory card is connected and which comprises an NFC interface that communicates with the NFC system (NFCS2) via a contactless connection, the memory card being configured to store the encrypted personalization data (CFP) and to transmit said data to the NFC system (NFCS2).

24. System according to any of claims 16 to 23, wherein the NFC system is configured to verify the received hash value (MCCFP) by applying the cryptographic function to the encrypted personalization data received from the processing unit (BS) and to the identification data of the NFC system, and to stop the personalization processing if the received hash value (MCCFP) is different from the calculated hash value (MCCFP1).

25. System according to any of claims 16 to 24, wherein the secure processor (HP3/NFCR2) is configured to generate the public key (PKF) and the corresponding secret key (SKF).

26. System according to any of claims 16 to 24, wherein the secure processor (HP3/NFCR2) is configured to receive the public key (PKF) and the corresponding secret key (SKF) in association with a certificate issued by a certification authority.
